# EUROPÄISCHE PATENTSCHRIFT

(11) **EP 3 732 107 B1**
(45) Veröffentlichungstag und Bekanntmachung des Hinweises auf die Patenterteilung: **08.02.2023**
(21) Anmeldenummer: 18778859.1
(22) Anmeldetag: 20.09.2018
(51) Int. Cl.: B65B 31/02, B65B 43/42, B65B 43/52, B65B 55/02, B65G 54/02

(54) **VERPACKUNGSEINRICHTUNG UND VERFAHREN ZUM BETREIBEN EINER VERPACKUNGSEINRICHTUNG**
PACKAGING DEVICE AND METHOD FOR OPERATING THE PACKAGING DEVICE
DISPOSITIF D'EMBALLAGE ET PROCÉDÉ POUR FAIRE FONCTIONNER CE DISPOSITIF D'EMBALLAGE

(30) Priorität: 29.12.2017 DE 102017131436
(43) Veröffentlichungstag der Anmeldung: 04.11.2020
(73) Patentinhaber: SIG Combibloc Services AG, 8212 Neuhausen am Rheinfall (CH)
(72) Erfinder: ZAGAR, Franco, 47929 Grefrath (DE)
(74) Vertreter: Cohausz & Florack
(86) Internationale Anmeldenummer: PCT/EP2018/075404
(87) Internationale Veröffentlichungsnummer: WO 2019/129394

(56) Entgegenhaltungen:
- EP-A1- 2 420 450
- EP-A1- 2 743 192
- DE-A1-102012 112 792
- DE-A1-102014 102 630

## Beschreibung

Der Gegenstand betrifft eine Verpackungseinrichtung sowie ein Verfahren zum Betreiben einer Verpackungseinrichtung.

Verpackungseinrichtungen im Sinne des Gegenstandes können jegliche Einrichtungen sein, die zum Verpacken eines Guts in einer Verpackung geeignet sind. Insbesondere können dies Verpackungseinrichtungen für die Lebensmittelindustrie sein, bei denen in aufgefaltete Packungen oder Schläuche pastöse oder schüttfähige Güter eingefüllt werden. Bei diesen Vorgängen wird die Packung entlang verschiedener Arbeitsstationen in einem Produktivbereich bewegt. Für die Bewegung wird die Packung auf einem Transportmittel transportiert. Herkömmlicherweise werden als Transportmittel in der Regel Kettenantriebe oder Bandantriebe eingesetzt. Diese zeichnen sich durch eine besondere Robustheit und geringe Fehleranfälligkeit aus.

Problematisch bei diesen Antrieben ist jedoch, dass diese anfällig gegenüber Verschmutzung sind, was insbesondere in der Lebensmittelindustrie relevant ist.

Dokument DE 10 2014 102630 offenbart eine Vorrichtung die innerhalb eines Reinraums Behälter transportiert und behandelt.

Aus der EP 2 743 192 A1 ist eine sequenzielle Abfülleinrichtung bekannt. Die Packungen werden dabei entlang einer Transportschiene bewegt. Die Packungen kommen dabie aber in Kontakt mit der Transportschiene und können Verunreinigen. Auch die Mitnehmer der Verpackungen werden entlang der gesamten Transportschiene bewegt und können Verunreinigungen eintragen.

Um Verunreinigungen des abzufüllenden Produkts zu vermeiden, sind höchste Hygienestandards einzuhalten. Um diese insbesondere bei der Abfüllung wenigstens eine flüssige Komponente enthaltende Lebensmittel einzuhalten, ist es erwünscht, möglichst wenige Teile in eine Aseptic-Zone einer Füllmaschine hinein und heraus zu bewegen und anschließend zu reinigen.

Aus diesem Grunde lag dem Gegenstand die Aufgabe zugrunde, eine Verpackungseinrichtung zur Verfügung zu stellen, bei welcher eine Entkopplung der hygienisch relevanten Bauteile von zumindest Teilen des Transportsystems möglich ist. Diese Aufgabe wird durch eine Verpackungseinrichtung nach Anspruch 1 sowie ein

Verfahren nach Anspruch 10 gelöst.

Gegenständlich wird eine Abkehr von herkömmlichen Transportketten oder Transportbändern vollzogen. Die Verpackungen werden mit Hilfe von Mitnehmern bewegt, welche von Transportschlitten an den Transportmitteln entkoppelbar sind, so dass diese zumindest teilweise entlang des Transportmittels von dem Transportmittel durch eine Wand getrennt sein können. Die Transportschlitten werden dabei entlang zumindest eines Transportmittels bewegt und führen die Mitnehmer über eine magnetische Kopplung mit sich. Zwischen einen Transportschlitten und einen Mitnehmer kann eine Wand geführt sein, die z.B. Teil eines Gehäuses einer sterilen Einheit der Verpackungseinrichtung sein kann.

Die Transportmittel können als Transportschiene gebildet sein. Die Transportschiene und die Transportschlitten bilden zusammen bevorzugt einen elektromotorischen Antrieb, insbesondere in Form eines Linearmotors. Auch können die Transportmittel aus einem Transportband oder einer Transportkette gebildet sein, auf denen aufgebaut oder in die integriert ein Transportschlitten angeordnet sein kann. Der Transportschlitten ist so ausgestaltet, dass er magnetisch mit einem Mitnehmer gekoppelt sein kann.

Das Transportmittel gibt die Transporttrajektorie der Transportschlitten vor. Bevorzugt ist jeder einzelne Transportschlitten auf einer Transportschiene unabhängig und individuell ansteuerbar. Durch eine elektromotorische Wirkverbindung zwischen der Transportschiene und den Transportschlitten kann jeder einzelne Transportschlitten individuell angesteuert werden und mit einer einstellbaren Geschwindigkeit, mit einem einstellbaren Beschleunigungsprofil, einem einstellbaren Hub und/oder an einen einstellbaren Ort der Transportschiene bewegt werden. Start und Stopp Zeiten für die Bewegung der einzelnen Transportschlitten sind ebenfalls individuell einstellbar.

Zwischen dem Mitnehmer und dem Transportschlitten ist eine Wand angeordnet. Entlang dieser Wand, die vorzugsweise parallel zu der Trajektorie des Transportmittels, zumindest in einem Teilbereich verläuft, sind Mitnehmer und Transportschlitten voneinander getrennt. Die Wand bildet eine mechanische Barriere, über die der Mitnehmer nicht weiter hinaus in Richtung Transportschlitten gezogen werden kann. Dadurch entsteht ein Spalt zwischen dem Mitnehmer und dem Transportschlitten. Die Magnetkraft ist jedoch ausreichend, diesen Spalt zu überwinden, mit anderen Worten durchdringen die B-Feldlinien die Wand.

Die Wand ist bevorzugt aus einem paramagnetischen oder einem nicht ferromagnetischen Material gebildet. Die Wand ist bevorzugt aus Glas, Plexiglas, Kunststoff oder dergleichen gebildet. Bevorzugt ist die Wand aus nichtferromagnetischem Edelstahl gefertigt. Auch ist der Einsatz hitzebeständiger Kunststoffe wie PEEK möglich. Auch kann eloxiertes Aluminium zum Einsatz kommen. Ausreichende mechanische und chemische Eigenschaften und dazu den Vorteil der Durchsichtigkeit können auch durch Acrylglas erreicht werden. Für Wände unterhalb der Packungen kann auch bruchsicheres Echtglas zum Einsatz kommen.

Der Spalt ist bevorzugt wenige Millimeter breit, so dass einerseits die Wandstärke ausreichend groß sein um der mechanischen Belastung stand zu halten und andererseits die Magnetkraft ausreichend ist, den Mitnehmer durch den Transportschlitten in Richtung der Transportrichtung mitzunehmen.

Die Wand ist insbesondere eine Wand eines Gehäuses einer Aseptikeinheit. Eine solche Aseptikeinheit kann eine sterile Abfülleinrichtung sein. In der Aseptikeinheit erfolgt insbesondere die Abfüllung des Guts, insbesondere des Lebensmittels in die Packung, welche durch den Mitnehmer entlang der Transportmittel durch die Abfülleinrichtung bewegt wird.

Wie bereits erläutert, können Transportschlitten und Transportschiene elektromotorisch in Wirkverbindung miteinander sein. Insbesondere erfolgt ein Antrieb der Transportschlitten elektromagnetisch. Hierbei können Transportschiene und Transportschlitten einen Linearmotor bilden. Der Vorteil des Linearmotors ist, dass jeder einzelne Transportschlitten individuell ansteuerbar sein kann. Hierzu weist jeder einzelne Transportschlitten vorzugsweise eine elektromagnetisch auslesbare Kennung auf. Ferner hat die Transportschiene Lesemittel, um die Position eines jeden Transportschlittens sowie die Kennung des Transportschlittens auslesen zu können. Dadurch kann durch eine geeignete Ansteuerung der Transportschiene eine individuelle Ansteuerung jedes einzelnen Transportschlittens erfolgen.

Ein Mitnehmer kann mechanisch mit einem Träger gekoppelt sein, der zur Aufnahme von vorzugsweise nach oben hin geöffneten, vorzugsweise am Boden oder Giebel bereits geschlossenen Packungen gebildet ist. Vorzugsweise können auf einem oder durch einen solchen Träger mehrere Packungen nebeneinander, quer zur Bewegungsrichtung der Packungen aufgenommen werden. Hierdurch ist eine parallele Verarbeitung von nebeneinander, quer zur Transportrichtung angeordneten Packungen möglich, so dass der Durchsatz der Verpackungsmaschine entsprechend der Anzahl der nebeneinander angeordneten Packungen erhöht werden kann.

Entlang eines Produktivbereichs (auch als Prozessbereich zu bezeichnen) kann eine Mehrzahl an Arbeitsstationen der Verpackungsmaschine angeordnet sein. Mit jedem Takt können die Transportschlitten/Verpackungen jeweils zu einer stromabwärts folgenden, insbesondere zur unmittelbar nächsten oder zur übernächsten Arbeitsstation bewegt werden und dort weiterverarbeitet werden. Nach dem Vorschub und der Verweilzeit kann ein Takt zu Ende sein und es erfolgt der nächste Takt.

Die Packungen werden stromabwärts, in einem Strom transportiert. Der Strom kann eine Abfolge von Packungen sein, die gleichmäßig oder ungleichmäßig in einer Richtung transportiert werden. Der Strom kann geschlossen oder mit regelmäßigen oder unregelmäßigen Lücken ausgebildet sein und durch einen kontinuierlichen oder getakteten Herstellungsprozess erzeugt sein.

Der Produktivbereich, hier insbesondere die sterile Abfülleinheit, auch als Aseptikeinheit bezeichnet, weist insbesondere folgende Arbeitsstationen alternativ oder kumulativ zueinander auf. Zunächst kann eine Sterilisationsstation vorgesehen sein, in der Sterilisationsmittel auf die Mitnehmer und/oder Träger und/oder Packungen aufgebracht wird, insbesondere aufgedampft wird. Eine weitere Arbeitsstation kann ein Einwirken des Sterilisationsmittels beinhalten. Eine weitere Arbeitsstation kann ein Trocknen des Mitnehmers, des Trägers und/oder der Packungen beinhalten. Weitere Arbeitsstationen können Fülleinheiten beinhalten, wobei die Fülleinheiten vorzugsweise in doppelter Ausfertigung nacheinander entlang der Transportrichtung so angeordnet sind, dass zu einem Zeitpunkt bzw. in einem Takt jeweils zumindest zwei Packungen, bei mehrbahniger Anordnung pro Packungsbahn, gefüllt werden können. Die Fülleinrichtungen können unterschiedliche Füllgeschwindigkeiten realisieren und beispielsweise auch unterschiedliche Produktmischungen beinhalten. Auch ist es möglich, dass im Anschluss an die Fülleinrichtung bzw. die Fülleinrichtungen vor dem Versiegeln noch wenigstens eine weitere Bearbeitungsstation vorgesehen ist, in der dem in der Packung befindlichen Produkt beispielsweise noch eine Fein- oder Zusatzdosierung verabreichbar ist oder in der ein gasförmiges Medium, insbesondere Inertgas wie z.B. Stickstoff, in den offenen Packungsraum oberhalb des Produktfüllstandes füllbar ist. Eine weitere Arbeitsstation kann das Aufbringen von, vorzugsweise heißem, Dampf und/oder das Falten eines Packungsgiebels beinhalten. Eine weitere Arbeitsstation kann das Versiegeln des Packungsgiebels, insbesondere mit Ultraschall beinhalten. Hiernach kann die sterile Abfülleinheit beendet sein. Eine weitere Arbeitsstation kann aber auch beispielsweise das Aufbringen von Applikationen, beispielsweise von Ausgießern beinhalten. Die Arbeitsstationen, die nach dem Versiegeln folgen, können auch nach einem Ausschleusebereich der sterilen Abfülleinrichtung angeordnet sein. Diese Beschreibung des Produktivbereichs ist rein beispielhaft.

Es ist erkannt worden, dass eine Entkopplung der Transporteinrichtung, insbesondere der Transportmittel als auch des Transportschlittens von einem hygienisch relevanten Bereich, insbesondere des sterilen Arbeitsbereichs, dadurch erreicht werden kann, dass der Transportschlitten mit einem von dem Transportschlitten mechanisch getrennten Mitnehmer magnetisch gekoppelt. Für den Fall, dass die Transportmittel als Transportschiene gebildet sind, kann der Transportschlitten magnetisch entlang der Transportschiene bewegt werden. Ansonsten kann der Transportschlitten mechanisch durch die Transportmittel bewegt werden. Der Transportschlitten transportiert den Mitnehmer getrennt durch die Wand berührungslos über eine magnetische Kopplung. Somit entsteht ein Spalt zwischen dem Transportschlitten und dem Mitnehmer, und dieser Spalt kann dazu genutzt werden, eine hygienische Barriere zwischen dem Transportschlitten auf der einen Seite und dem Mitnehmer auf der anderen Seite zu bilden.

Die magnetische Kopplung kann derart sein, dass der Mitnehmer so angeordnet ist, dass der Transportschlitten zwischen Mitnehmer und Transportmittel angeordnet ist.

Der Transportschlitten kann eine untere Oberfläche und eine obere Oberfläche aufweisen, wobei die untere Oberfläche dem Transportmittel zugewandt ist und die obere Oberfläche von dem Transportmittel abgewandt ist. Dazu können zumindest vier Seitenflächen vorgesehen sein, wobei die Flächennormalen von zwei seitlichen Seitenflächen senkrecht zur Bewegungsrichtung des Transportschlittens stehen. Zwei weitere Seitenflächen können mit ihrer Flächennormalen parallel zur Bewegungsrichtung des Transportschlittens ausgerichtet sein. Die magnetische Kopplung kann zwischen dem Mitnehmer und der oberen Oberfläche und/oder zwischen dem Mitnehmer und einer seitlichen Seitenfläche erfolgen. Die B-Feldlinien können entweder im Wesentlichen parallel zur der Flächennormalen der oberen Oberfläche verlaufen oder im Wesentlichen parallel zur der Flächennormalen der seitlichen Seitenfläche verlaufen.

Der Luftspalt, der zwischen dem Mitnehmer und dem Transportschlitten gebildet ist kann dadurch entstehen, dass der Mitnehmer derart gelagert ist, dass die Lagerung eine Gegenkraft auf die zwischen dem Transportschlitten und dem Mitnehmer wirkende Magnetkraft aufbringt.

Transportschlitten und Mitnehmer sind über zumindest einen Permanentmagneten magnetisch gekoppelt. Entweder kann der Transportschlitten an der oberen Oberfläche und/oder einer seitlichen Seitenfläche einen zweiten Permanentmagneten aufweisen oder der Mitnehmer kann an seiner dem Transportschlitten zugewandten Seite einen Permanentmagneten aufweisen. In diesem Fall kann dann jeweils das andere Element, also Transportschlitten oder Mitnehmer ferromagnetisch sein. Auch ist es möglich, dass sowohl Transportschlitten als auch Mitnehmer beide permanentmagnetisch sind und mit jeweils gegensätzlichen magnetischen Polen an den einander zugewandten Seiten ausgestattet sind.

In beiden Fällen entsteht eine Magnetkraft, welche den Transportschlitten in Richtung Mitnehmer bzw. umgekehrt zieht. Sind zwei Permanentmagneten eingesetzt, ist die Magnetkraft natürlich höher, als wenn nur ein Permanentmagnet vorgesehen ist und eines der Elemente ferromagnetisch ist.

Gemäß einem Ausführungsbeispiel wird vorgeschlagen, dass die Transportmittel in einem Abfüllbereich entlang einer Aseptikeinheit geführt sind. Dabei sind die Transportmittel jedoch gegenüber dem Inneren der Aspetikeinheit durch das Gehäuse der Aspeptikeinheit abgegrenzt. Die Aseptikeinheit umschließt vorzugsweise die Mitnehmer samt ihrer Führungsschiene umlaufend. Die Aseptikeinheit dient zur aseptischen Führung der Mitnehmer und Packungen sowie Trägern im Füllbereich. Durch die Aseptikeinheit werden die Mitnehmer und die Packungen sowie gegebenenfalls die Träger vor dem Befüllen mit dem Produkt sterilisiert. Die Sterilisation wird vorzugsweise mit HzOz durchgeführt. Der Transportkanal der Aseptikeinheit, in dem die Mitnehmer und gegebenenfalls Packungen und Träger geführt werden, sollte möglichst einen kleinen Querschnitt aufweisen und Mitnehmer, Träger und/oder Verpackungen radial umschließen. Die Mitnehmer werden durch die magnetische Kopplung mit den Transportschlitten entlang der Transportschiene geführt, jedoch liegen Transportmittel und Transportschlitten außerhalb der Aseptikeinheit und tragen somit keine Verunreinigung in die Aseptikeinheit ein. Zudem wirken sich die in der Aspeptikeinheit im Betrieb vorherrschenden Umweltbedingungen nicht oder nur gedämpft auf die Transportmittel und die Transportschlitten aus. Dies ist von Vorteil, da diese Bauteile ansonsten einem erhöhtem Verschleiß ausgesetzt wären.

Gemäß einem Ausführungsbeispiel wird vorgeschlagen, dass die Aseptikeinheit die Mitnehmer radial umlaufend umschließt. D.h., dass umlaufend zu der Bewegungsrichtung der Mitnehmer die Aseptikeinheit die Mitnehmer umschließt. Insbesondere hat die Aseptikeinheit ein Gehäuse um die Mitnehmer herum. Entlang der Bewegungsrichtung der Mitnehmer hat die Sterilisationseinheit zumindest eine Eingangsöffnung und eine Ausgangsöffnung, über die die Packungen insbesondere auf Trägern ein- und ausgeschleust werden. Hierbei erfolgt z.B. eine Übergabe der Träger von den Transportschlitten auf die Mitnehmer bzw. umgekehrt. Auch kann der Mitnehmer von dem Transportschlitten an der Einschleusung getrennt werden, indem durch die Bewegung von Mitnehmer und Transportschlitten die Wand zwischen Mitnehmer und Transportschlitten kommt und somit die Trennung an der Einschleusung bewirkt. Während des Transports durch die Sterilisationseinheit sind Mitnehmer und/oder Träger und Packungen durch das Gehäuse umhaust und eine sterile Befüllung der Packungen kann erfolgen. An der Ausschleusung kann der Mitnehmer wieder unmittelbar auf einen Transportschlitten, ohne die Wand dazwischen, geführt werden.

In der Aseptikeinheit wird zunächst Sterilisationsmittel, insbesondere HzOz vorzugsweise in dampfförmigen Zustand zugeführt. Dabei kann HzOz Dampf zugeführt werden, um die Sterilisierung von Mitnehmer und/oder die Packungen thermisch zu unterstützen. Die Zuführung von HzOz Dampf für eine Heißsterilisation, insbesondere für eine Dampfsterilisation, kann insbesondere während oder nach dem Zuführen des Produktes erfolgen, insbesondere an oder nach der Fülleinrichtung.

Außerhalb der Aseptikeinheit kann zudem eine (insbesondere zusätzliche) Sterilisierung der Mitnehmer erfolgen, um den Keimeintrag in die Aseptikeinheit zu verhindern und eine hohe Einwirkzeit an schwer zu sterilisierenden Bereichen zu gewährleisten.

Wie bereits erläutert, ist gemäß einem Ausführungsbeispiel vorgeschlagen, dass an dem Transportschlitten ein Permanentmagnet zur Kopplung mit den Transportmitteln angeordnet sein kann. Neben dem Permanentmagneten, welcher den Transportschlitten mit dem Transportmittel magnetisch koppelt, kann ein weiterer Permanentmagnet zur Kopplung mit dem Mitnehmer vorgesehen sein. Diese beiden Permanentmagneten sind bevorzugt auf einander gegenüberliegende Seiten angeordneten. Es ist jedoch auch denkbar und gemäß einem vorteilhaften Ausführungsbeispiel vorgeschlagen, dass ein und derselbe Permanentmagnet mit einem ersten magnetischen Pol zur magnetische Kopplung mit dem Transportmittel genutzt wird und mit einem zweiten magnetischen Pol zur Kopplung mit dem Mitnehmer genutzt wird.

Auch wird vorgeschlagen, dass der Mitnehmer ferromagnetisch ist und mit dem permanentmagnetischen Transportschlitten magnetisch gekoppelt ist.

Eine erhöhte Magnetkraft wird insbesondere auch dadurch erreicht, dass der Mitnehmer permanentmagnetisch sein kann und mit dem Transportschlitten magnetisch gekoppelt ist, wenn der Transportschlitten ebenfalls einen Permanentmagneten zur Kopplung mit dem Mitnehmer aufweist. Auf der anderen Seite kann das Gewicht des Transportschlittens reduziert werden, wenn der Transportschlitten ferromagnetisch an der dem Mitnehmer zugewandten Seite ist und dieser ferromagnetische Teil mit dem Mitnehmer, der permanentmagnetisch ist, magnetisch gekoppelt ist.

Es wird auch vorgeschlagen, dass der Mitnehmer auf einer Führungsschiene gelagert ist, wobei die Führungsschiene zumindest in Teilen parallel zu den Transportmitteln verläuft. Insbesondere im Bereich der Aseptikeinheit verlaufen die Führungsschiene parallel zu den Transportmitteln. Insbesondere ist der Abstand der Führungsschiene zu den Transportmitteln entlang der Aseptikeinheit konstant. Die Führungsschiene ist vorzugsweise derart angeordnet, dass der Mitnehmer zwischen der Führungsschiene und den Transportmitteln angeordnet ist. Somit kann der Mitnehmer, insbesondere entlang eines äußeren Umfangs der Führungsschiene, durch die Führungsschiene geführt werden. Der Mitnehmer ist insbesondere an der Führungsschiene kugelgelagert. Es ist jedoch auch möglich, dass der Mitnehmer an der Führungsschiene gleitend gelagert ist. Die Führungsschiene ist vorzugsweise ein geschlossener Ring. Auch kann der Mitnehmer in der Aspeptikeinheit durch ein Luftkissenlager geführt sein.

Auch ist es möglich, dass die Transportmittel mehrteilig sind und ein erstes Transportmittel bis an die Einschleusung zu einem Gehäuse z.B. der Aseptikeinheit geführt ist, zwischen der Einschleusung und der Ausschleusung ein zweites Transportmittel gebildet ist und nach der Ausschleusung ein drittes Transportmittel gebildet ist. Dabei kommt es zu einem Übergang des Transportschlittens zwischen den jeweiligen Transportmitteln. Die Transportmittel sind insbesondere zwei voneinander verschiedene Transportmittel, wobei im Bereich des Gehäuses z.B. eine Transportschiene gebildet ist, die als Linearmotor mit dem Transportschlitten wirkt und vor der Einschleusung und/oder nach der Ausschleusung ein Transportband, eine Transportkette oder dergleichen den Transportschlitten führt.

Gemäß einen eigenständig erfinderischen Ausführungsbeispiel, welches mit allen hier beschriebenen Merkmalen frei kombinierbar ist, wird der Mitnehmer durch den Transportschlitten entlang der Führungsschiene bewegt. Für einen eventuellen Rücktransp ort des Mitnehmers, wenn diese nur in der Aseptikeinheit geführt werden sollen ist es beispielsweise, eigenständig erfinderisch, möglich, dass alle Mitnehmer, welche an der Führungsschiene angeordnet sind, mechanisch miteinander verbunden sind, beispielsweise über ein Zugseil. Dann nehmen die Mitnehmer, welche entlang des Schenkels der Führungsschiene geführt werden, welcher der Transportschiene zugewandt ist, gleichzeitig die Mitnehmer, welche auf den Schenkeln der Führungsschiene angeordnet sind, welche der Transportschiene abgewandt sind mit. Somit bewirkt die magnetische Kopplung zwischen dem Transportschlitten und den Mitnehmern gleichzeitig, dass die Mitnehmer umlaufend entlang der Transportschiene bewegt werden.

Gemäß einem Ausführungsbeispiel wird vorgeschlagen, dass der Mitnehmer auf einem Gleitlager gelagert ist. Das Gleitlager verläuft vorzugsweise in Teilen parallel zur Transportschiene. Das Gleitlager kann durch die Innenseite der Wand gebildet sein, welche zwischen dem Mitnehmer und dem Transportschlitten angeordnet ist. Dabei kann in der Wand beispielsweise eine Führungsnut oder eine Führungsnocke gebildet sein, entlang derer die Mitnehmer bewegt werden. Das Gleitlager bildet somit eine seitliche Führung der Mitnehmer, so dass die Mitnehmer parallel zu der Transportschiene bewegt werden.

Das Gleitlager ist vorzugsweise hydrostatisch oder hydrodynamisch. Ferner wird insbesondere im Bereich der Lebensmittelindustrie ein Schmierstoff verwendet, der ölfrei ist. Ganz besonders bevorzugt wird als Schmierstoff ein Gas, insbesondere Sterilluft, verwendet. Das Gleitlager ist demnach zur Ausbildung eines statischen oder dynamischen Gaskissens, insbesondere mit Sterilluft betriebenen Luftkissens gestaltet.

Gemäß einem Ausführungsbeispiel wird vorgeschlagen, dass wenigsten ein Abschnitt der Führungsschiene in der Aseptikeinheit angeordnet ist. Die Aseptikeinheit ist vorzugsweise zumindest umlaufend um die Führungsschiene in einem Gehäuse eingehaust. Das heißt, das Gehäuse umgibt vorzugsweise vollständig umlaufend die Führungsschiene. Auf einer Seite kann eine Öffnung einer Einschleusung vorgesehen sein, an denen die Packungen in die Aseptikeinheit eingeführt werden. Auf einer anderen Seite kann eine Öffnung einer Ausschleusung vorgesehen sein, an denen die Packungen aus der Aseptikeinheit heraus geführt werden. Durch entsprechende Maßnahmen, beispielsweise durch einen Überdruck oder durch Fluidschleusen, insbesondere Sterilluftschleusen kann der Innenbereich der Aseptikeinheit steril gehalten werden.

Der Transport der Packungen entlang sowohl der Transportschiene als auch der Führungsschiene kann mittels Trägern erfolgen. Die Packungen können in, an oder auf den Trägern gehalten sein. Die Träger werden durch den Mitnehmer entlang der Transportmittel bzw. der Führungsschiene bewegt.

Vorzugsweise kann an einem Mitnehmer oder einem Transportschlitten ein Träger angeordnet sein, auf dem zumindest eine Packung, vorzugsweise jedoch zwei oder mehr als zwei Packungen gleichzeitig getragen werden. Der Träger kann dabei mechanisch so ausgestaltet sein, dass er den Boden oder den Giebel einer Verpackung aufnehmen kann. Der Träger kann mechanisch auch so ausgestaltet sein, dass er eine Verpackung klemmend, vorzugsweise seitlich klemmend aufnehmen kann.

Insbesondere, gemäß einer eigenständig erfinderischen Ausgestaltung, die mit allen hier beschriebenen Merkmalen frei kombinierbar ist, kann der Träger von dem Mitnehmer oder dem Transportschlitten relativ einfach entfernt und durch einen anderen Träger ausgetauscht werden. Somit kann der Mitnehmer oder der Transportschlitten für verschiedene Arten von Trägern als Führungsmedium dienen und auf verschiedenen Träger können verschiedene Verpackungstypen mit ggf. verschiedenen Querschnitten oder Formen zum Einsatz kommen. Der Träger kann in einer gleichen oder ähnlichen Weise an den Mitnehmern angeordnet sein. Der Träger ist sowohl von den Transportschlitten als auch von den Mitnehmern mechanisch lösbar. Dabei kann der Träger an dem Transportschlitten oder dem Mitnehmer verrasten und durch geeignete Maßnahmen, insbesondere im Bereich der Ein-/Ausschleusung gelöst werden. Auch kann der Träger fest an dem Mitnehmer angeordnet sein und an einer Einschleusung wird der Mitnehmer von dem Transportschlitten gelöst bzw. getrennt durch die Wand und in dem Gehäuse durch eine Wand getrennt durch den Transportschlitten bewegt. An der Ausschleusung wird der Mitnehmer unmittelbar, ohne Wand dazwischen, mit dem Transportschlitten gekoppelt. Dadurch wird erreicht, dass in dem Gehäuse weder Transportschlitten noch Transportmittel geführt werden.

Auch wird vorgeschlagen, dass ein Träger verschiedene Packungen derart aufnehmen kann, dass unabhängig von der Längenausdehnung der Packung bei verschiedenen Packungen jeweils an zumindest einem Ort des Transportmittels bzw. der Führungsschiene eine Oberkante der Packungen auf einem gleichen Niveau, insbesondere einem gleichen Abstand zum Transportmittel hat. Hierbei kann der Träger die Packungen entweder an verschiedenen Positionen in Längsrichtung aufnehmen oder der Träger kann die relative Lage der Packungen zur Schiene, insbesondere quer bzw. rechtwinklig zur Schiene verstellen. Hierdurch kann erreicht werden, dass eine Oberkante einer Packung, unabhängig von der Längsausdehnung einer Packung, an zumindest einer Stelle entlang des Transportmittels einen gleichen Abstand zu dem Transportmittel hat. Dies ist insbesondere bei Packungen mit verschiedenen Füllvolumina sinnvoll, da hierdurch stets der gleiche Abstand einer Öffnung zu z.B. einer Fülleinrichtung eingehalten werden kann und die Packungen in einem gleichen Abstand entlang der Fülleinrichtung bewegt werden können und dort befüllt werden können.

Die Träger für die Packungen können an dem Transportschlitten oder den Mitnehmern befestigt sein. Insbesondere über Magnetverbindungen oder Clickverbindungen können die Träger an den Transportschlitten oder den Mitnehmern angeordnet sein, so dass sie leicht austauschbar sind. Auch ist es möglich, dass zwei Transportschlitten / Mitnehmer zueinander so beweglich sind, dass sie die Packung greifend aufnehmen. Dabei kann eine nach hinten (zur Bewegungsrichtung) weisende Kante eines ersten Transportschlittens / Mitnehmers bzw. eines ersten Trägers mit einer nach vorne (zur Bewegungsrichtung) weisenden Kante eines nachfolgenden Transportschlitten /Mitnehmers bzw. Trägers so interagieren, dass die Packung zwischen der hinteren Kante und der vorderen Kante verklemmt ist. Hierzu können die Transportschlitten so aufeinander zu bewegt werden, dass ein Verklemmen der Packungen zwischen den Transportschlitten bzw. den daran angeordneten Trägern erfolgen kann.

Die Transportschlitten können an der Transportschiene geführt werden. Zwar ist die Bewegung der Transportschlitten entlang der Transportschiene vorzugsweise elektromagnetisch, insbesondere in der Form eines Linearmotors, jedoch kann eine magnetische Führung nicht immer vollständig ausreichen, die Transportschlitten an der Transportschiene zu halten. Daher wird vorgeschlagen, dass die Transportschlitten mit einer U-förmigen, I-förmigen, L-förmigen, S-förmigen oder C-förmigen Aufnahme an der Transportschiene angeordnet sind. Die Transportschlitten können die Transportschiene mit ihren Aufnahmen klammerartig umgreifen. Quer zur Bewegungsrichtung sind die Transportschlitten formschlüssig angeordnet. Hierdurch wird verhindert, dass die Transortschlitten von der Transportschiene rutschen. Insbesondere bei einem winkligen Verlauf der Transportschiene z.B. aus der Horizontalen in die Vertikale, ist diese Anordnung sinnvoll. Auch können die Transportschlitten rollend an der Transportschiene gelagert sein. Dabei kann durch die Magnetkraft eine Anzugskraft auf die Transportschlitten wirken, so dass diese nicht von der Transportschiene fallen. Die Anzugskraft ist insbesondere größer als die Schwerkraft der Transportschlitten samt Mitnehmer. Die Rollen der Transportschlitten können in einer Nut oder an einer Nocke der Transportschiene geführt sein.

Wie bereits erläutert, ist an einem Transportschlitten oder Mitnehmer vorzugsweise ein Träger zur Aufnahme von zumindest einer Packung angeordnet. Der Träger ist vorzugsweise derart am Transportschlitten / Mitnehmer angeordnet, dass er rechtwinklig zur Bewegungsrichtung des Transportschlittens mehrere Aufnahmen nebeneinander aufweist, an denen Packungen angeordnet werden können. Ein Träger kann beispielsweise T-förmig auf einem Transportschlitten / Mitnehmer aufgesetzt sein. Der Transportschlitten / Mitnehmer kann vorzugsweise mittig am Träger angeordnet sein. Der Träger kann zur Aufnahme verschiedenförmiger Packungen/Packungsformen gebildet sein. Auf einem Träger können zumindest zwei Packungen, auch mit verschiedenen Querschnitten angeordnet sein.

Auch ist es möglich, dass zumindest zwei parallel verlaufende Transportschienen/Ketten, Bänder und/oder Führungsschienen vorgesehen sind.

Dieses sind vorzugsweise zueinander deckungsgleich in ihrem Verlauf und nebeneinander mit einem konstanten Abstand zueinander angeordnet. An jeder sind Transportschlitten bzw. Mitnehmer vorgesehen. Jeweils zwei Transportschlitten / Mitnehmer sind synchronisiert auf den beiden Transportschienen/Ketten, Bänder und/oder Führungsschienen geführt. D.h., dass auf jeder Transportschiene/Kette, Band und/oder Führungsschiene jeweils ein Transportschlitten / Mitnehmer vorgesehen ist, der mit jeweils einem anderen Transportschlitten auf / Mitnehmer der anderen Transportschiene/Kette, Band und/oder Führungsschiene synchronisiert ist. Die Synchronisation bedeutet, dass die Transportschlitten / Mitnehmer möglichst gleichförmig entlang der jeweiligen Transportschiene/Kette, Band und/oder Führungsschiene bewegt werden. Die Position der Transportschlitten in Bewegungsrichtung ist dabei vorzugsweise synchronisiert, so dass die Transportschlitten zu jeder Zeit möglichst die gleiche Position auf ihrer jeweiligen Transportmittel einnehmen. Zwischen den Transportschlitten / Mitnehmern kann ein Träger angeordnet sein, auf dem die Packungen angeordnet werden können.

Eine besonders gute Synchronisation der Transportschlitten wird dadurch realisiert, dass ein Transportschlitten an einer ersten der Transportmittel als Master-Schlitten angesteuert ist und ein Transportschlitten an einer zweiten der Transportmittel als Slave-Schlitten abhängig von dem Master-Schlitten geführt ist. Eine Master-Slave-Steuerung ermöglicht es, dass der Slave-Schlitten stets synchron zum Master-Schlitten geführt ist. Hierbei gibt der Master-Schlitten vorzugsweise die Position des Schlittens auf dem Transportmittel vor und der Slave-Schlitten folgt dieser Position unmittelbar und in Echtzeit. Dadurch wird ein synchroner Lauf der jeweils beiden Transportschlitten entlang ihrer jeweiligen Transportmittel ermöglicht. Wählt man einen virtuellen Transportschlitten als Masterschlitten aus, an dem sich die (beiden) Transportschlitten als Slave-Schlitten in gleichwertiger Abhängigkeit orientieren, erhält man eine ganz besonders gute Synchronisation.

Bei der Verpackungseinrichtung werden die Träger sowohl durch die Mitnehmer als auch durch die Transportschlitten entlang der Trajektorie der Transportschiene zumindest in Abschnitten bewegt.

Das kann bedeuteten, dass die Träger zwischen dem Transportschlitten und dem Mitnehmer übergeben werden müssen. Insbesondere kann an einer Einschleusung zu dem Produktivbereich, in dem die Mitnehmer den Träger bewegen, eine Übergabe der Träger von dem Transportschlitten an den Mitnehmer erfolgen. Darüber hinaus kann an einer Ausschleusung des entsprechenden Produktivbereichs eine Übergabe der Träger von dem jeweiligen Mitnehmer auf den jeweiligen Transportschlitten erfolgen. Um dies zu gewährleisten, sind die Träger lösbar an dem Mitnehmer angeordnet. Ferner sind die Träger lösbar an dem Transportschlitten angeordnet.

Auch kann der Träger an dem Mitnehmer angeordnet sein oder Teil des Mitnehmers sein.

Insbesondere kann der Mitnehmer an der Einschleusung samt Träger so von dem Transportschlitten gelöst werden, dass in einen sich bildenden Spalt eine Wand des Gehäuses geführt ist. An der Ausschleusung kann der Mitnehmer samt Träger wieder unmittelbar an dem Transportschlitten angeordnet werden.

Der Träger kann beispielsweise zunächst an dem Transportschlitten lösbar angeordnet werden. An einer Einschleusung erfolgt eine Übergabe, indem der Träger von dem Transportschlitten gelöst und lösbar an dem Mitnehmer angeordnet wird. Anschließend erfolgt ein Weitertransport des Trägers durch den Mitnehmer.

Auch ist es möglich, dass ein Träger durch einen Mitnehmer transportiert wird, wobei der Träger an dem Mitnehmer lösbar angeordnet ist. An einer Ausschleusung kann eine Übergabe an den Transportschlitten erfolgen. Diese Übergabe erfolgt derart, dass der Träger von dem Mitnehmer gelöst wird und an dem Transportschlitten befestigt wird. Diese Befestigung kann wiederum lösbar sein.

Für eine Übergabe kann es sinnvoll sein, den Träger von dem Transportschlitten und/oder dem Mitnehmer abzuheben. Der Träger kann dabei insbesondere in der durch die Transportrichtung definierten Achse gelagert sein. Das heißt, dass entlang dieser Achse sowohl vor als auch hinter dem Träger an dem Mitnehmer und/oder dem Transportschlitten Halterungselemente vorgesehen sind, wohingegen der Träger in einer Richtung senkrecht zur Transportrichtung und senkrecht zur Längserstreckung des Trägers aus dieser Halterung herausgehoben werden kann. Der Träger kann beispielsweise in einer U-förmigen Aufnahme in dem Mitnehmer und/oder dem Transportschlitten gehalten werden und nur einen Freiheitsgrad in einer Richtung senkrecht zur Transportrichtung und senkrecht zur Längserstreckung des Trägers aufweisen.

Wie bereits erläutert, wird die Verpackungseinrichtung insbesondere auch in der Lebensmittelindustrie eingesetzt. In der Aseptikeinheit werden Packungen mit dem aufzunehmenden Produkt befüllt. Dabei ist das Produkt vorzugsweise ein Lebensmittel, insbesondere ein Getränk und kann bedarfsweise stückige Anteile aufweisen. Grundsätzlich sind die zu verpackenden Produkte schüttfähig oder rieselfähig, insbesondere fließfähig. Besonders bevorzugt sind entsprechende Packungen zur Aufnahme eines wenigstens eine flüssige Komponente aufweisenden Lebensmittels. Das Abfüllen des Lebensmittels erfolgt vorzugsweise in einer Abfülleinrichtung. Zur Vermeidung von Verschmutzung der Abfülleinrichtung durch den Transportschlitten wird vorgeschlagen, dass der Mitnehmer umlaufend in einer Abfülleinrichtung geführt ist. Der Mitnehmer läuft somit vollständig innerhalb der Abfülleinrichtung. Auch kann der Mitnehmer samt Träger und Packungen vor der Abfülleinrichtung von dem Transportschlitten gelöst werden. Dann werden der Transportschlitten und die Transportmittel außerhalb der Abfülleinrichtung geführt und nur der Mitnehmer samt Träger in der Abfülleinrichtung. Eine Abfülleinrichtung kann eine Aspektikeinheit umfassen oder als Aspektikeinheit gebildet sein. Somit wird nur der Mitnehmer innerhalb der Abfülleinrichtung, respektive der Aseptikeinheit geführt. Dies führt zu einer erhöhten Reinheit der Abfülleinrichtung.

Um sicherzustellen, dass der Mitläufer auch durch den Transportschlitten mitgenommen wird, beträgt die Anzugskraft zwischen dem Mitläufer und dem Transportschlitten 200 N und mehr.

Darüber hinaus wird vorgeschlagen, dass die Transportschiene und die Transportschlitten als Linearmotor gebildet sind.

Gemäß einem Ausführungsbeispiel wird vorgeschlagen, dass die Transportschiene aus einem Stator des Linearmotors gebildet ist und insbesondere eine Mehrzahl entlang der Transportschiene angeordnete Magnetspulen aufweist. Durch eine geeignete Ansteuerung bzw. Erregung der Magnetspulen lässt sich das Magnetfeld entlang der Transportschiene variieren und vorzugsweise in Bewegungsrichtung verschieben. Die Transportschlitten können so dem sich verschiebenden Magnetfeld folgen. Vorzugweise ist die Anzahl der individuell ansteuerbaren Magnetfelder zumindest entsprechend der Anzahl der Transportschlitten auf der Transportschiene. Somit ist jeder einzelne Transportschlitten individuell ansteuerbar.

Die Transportschlitten folgen dem Magnetfeld der Transportschiene insbesondere dann, wenn diese als Permanentmagneten gebildet sind. Der Vorteil der Auslegung der Transportschlitten mit einem Permanentmagneten liegt darin, dass es nicht notwendig ist, die Transportschlitten bzw. darin angeordnete Magnetspulen elektrisch zu erregen, was einen elektrischen Kontakt zwischen den Transportschlitten und einer Kontaktschiene bedingte.

Vorzugsweise sind die Transportmittel Teil einer Transportvorrichtung, durch welche die Transportschlitten vorzugsweise umlaufend bewegt werden. Die Transportmittel bilden dabei vorzugweise einen Schenkel der Transportvorrichtung. Die Transportvorrichtung kann zumindest drei winklig zueinander verlaufende Schenkeln aufweisen. Die Transportvorrichtung bildet vorzugsweise einen geschlossenen Ring mit insbesondere zumindest drei Schenkeln, von denen zumindest ein Schenkel eine Transportschiene sein kann. Die Transportmittel können aus voneinander verschiedenen Arten von Transportschienen, Bändern oder Ketten gebildet sein.

Gemäß einem Ausführungsbeispiel wird vorgeschlagen, dass die Transportvorrichtung zumindest zwei einander gegenüberliegende Schenkel aufweist, wobei ein erster der Schenkel den Produktivbereich bildend, zumindest teilweise in der Fülleinrichtung der Verpackungsmaschine geführt ist und ein zweiter der Schenkel einen Pufferbereich bildet. Pufferbereich und Produktivbereich liegen somit auf einander gegenüberliegenden Seiten der Transportmittel. Zwischen dem Pufferbereich und dem Produktivbereich können die Packungen auf das Transportsystem übergeben oder von diesem entfernt werden. Die Übergabe kann z.B. mittels eines Dornrads erfolgen. Die Entfernung kann über einen Absetzer erfolgen. Pufferbereich und Produktivbereich sind bevorzugt vertikal zueinander versetzt. Über jeweils vertikale Schenkel können diese miteinander verbunden sein. Das heißt, dass sich die Transportvorrichtung in einer vertikalen Ebene bevorzugt erstreckt.

Aufgefaltete Packungsmäntel, insbesondere mit einem verschlossenen Boden oder Giebel, werden an einen jeweiligen Transportschlitten / Mitnehmer bzw. dessen Träger herangeführt. Die Packungen werden durch den Träger aufgenommen und zu dem Produktivbereich geführt. Der Produktivbereich kann eine Einschleusung in einen Abfüllbereich, insbesondere in eine sterile Abfülleinrichtung aufweisen. Ausgangsseitig der sterilen Abfülleinrichtung erfolgt eine Ausschleusung. An der Einschleusung kann z.B. der Mitnehmer von dem Transportschlitten abgelöst werden, so dass sich ein Spalt zwischen Mitnehmer und Transportschlitten bildet. Dieses Ablösen kann durch eine auf dem Transportmittel aufliegende Lasche erfolgen. Die Lasche kann Teil des Gehäuses der sterilen Abfülleinrichtung sein. Durch die magnetische Kopplung jedoch wird der Mitnehmer weiterhin durch den Transportschlitten entlang des Transportmittels bewegt.

Entlang des Produktivbereichs folgt der Mitnehmer dem Transportschlitten durch magnetische Kopplung. Dabei sind die Transportschiene und der Transportschlitten außerhalb eines Gehäuses des Produktivbereichs und der Mitnehmer und der Träger innerhalb des Gehäuses.

Auch ist es möglich, dass der Träger an der Einschleusung von dem Transportschlitten auf einen Mitnehmer übergeben wird.

An der Ausschleusung werden die gefüllten, vorzugsweise verschlossenen Verpackungen aus der Abfülleinrichtung heraus geführt. Dort ist es möglich, dass der Mitnehmer samt Träger wieder an den Transportschlitten gekoppelt wird. Andererseits kann der Träger auch von dem Mitnehmer wieder an den Transportschlitten übergeben werden.

Auch ist es möglich, dass entlang des Produktivbereichs der Mitnehmer magnetisch gekoppelt mit dem Transportschlitten, getrennt durch die Wand bewegt wird, an der Einschleusung und/oder der Ausschleusung die Kopplung zwischen Mitnehmer und Transportschlitten jedoch getrennt wird und der Mitnehmer von einem anderen Transportmittel getrennt (an der Einschleusung) und/oder an ein anderes Transportmittel übergeben (an der Ausschleusung) wird. Somit wird der Mitnehmer bis zur Einschleusung und/oder ab der Ausschleusung von einem anderen Transportmittel bewegt und entlang des Produktivbereich durch den Transportschlitten, jedoch dort durch die Wand getrennt.

Bei der Bewegung entlang der Transportmittel ist es möglich, dass im Produktivbereich die Mitnehmer bzw. die Träger die Packungen aufrecht stehend führen. Die Packungen sind dabei vorzugsweise durch die Träger bzw. die Mitnehmer gehalten. Die Packungen werden im Produktivbereich entlang einer linearen Vorschubrichtung bewegt. Die Transportmittel können dabei jedoch in einem Winkel verlaufen, derart, dass beispielsweise in einem Ausschleusebereich und/oder einem Einschleusebereich die Transportmittel zumindest teilweise quer zur Horizontalen vertikal verlaufen und im Produktivbereich zumindest teilweise horizontal verlaufen. Die Bereiche können winklig zueinander sein. Hierdurch kann eine Übergabe der Mitnehmer an der Einschleusung und/oder der Ausschleusung vom Transportschlitten auf ein anderes Transportmittel und/oder umgekehrt erleichtert sein.

Nachfolgend wird der Gegenstand anhand einer Ausführungsbeispiele zeigenden Zeichnung näher erläutert. In der Zeichnung zeigen:
- Fig. 1a: eine schematische Ansicht eines Transportschlittens mit einem Mitnehmer;
- Fig. 1b: eine schematische Ansicht eines Transportschlittens mit einem Mitnehmer;
- Fig. 1c: eine schematische Ansicht eines Transportschlittens mit einem Mitnehmer;
- Fig. 2: eine schematische Ansicht von Transportschlittens und Mitnehmer entlang einer Transportschiene;
- Fig. 3a: eine schematische Ansicht eines Transportsystems das nicht gemäß der Erfindung ist;
- Fig. 3b: eine schematische Ansicht eines Transportsystems das nicht gemäß der Erfindung ist;
- Fig. 3c: eine schematische Ansicht eines Transportsystems gemäß einem Ausführungsbeispiel;
- Fig. 3d: eine schematische Ansicht eines Transportsystems gemäß einem Ausführungsbeispiel;
- Fig. 4: eine Seitenansicht eines Transportsystems an einer Aseptikeinheit;
- Fig. 5: eine Draufsicht auf ein Transportsystem;
- Fig. 6a, b: schematische Ansichten von Lagerungen des Mitnehmers.

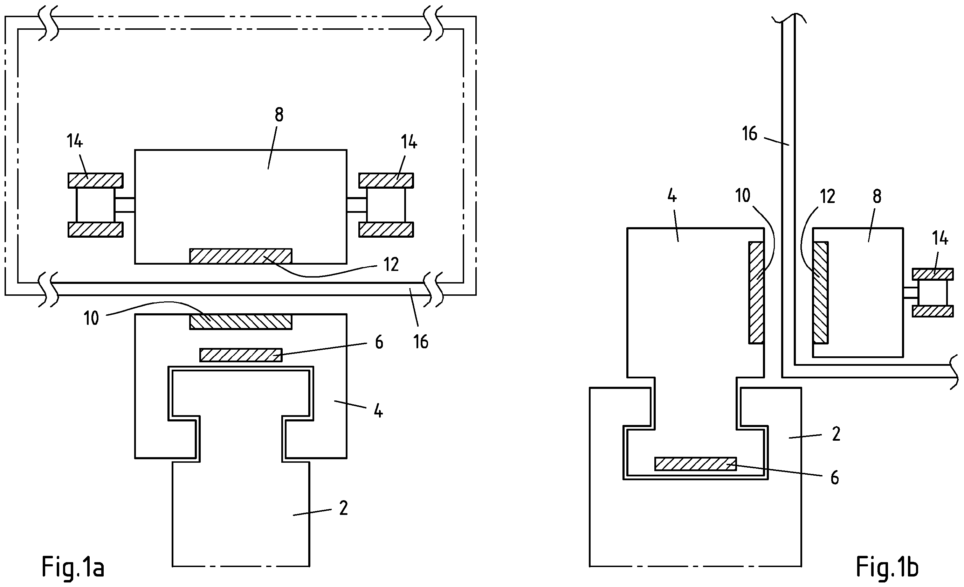

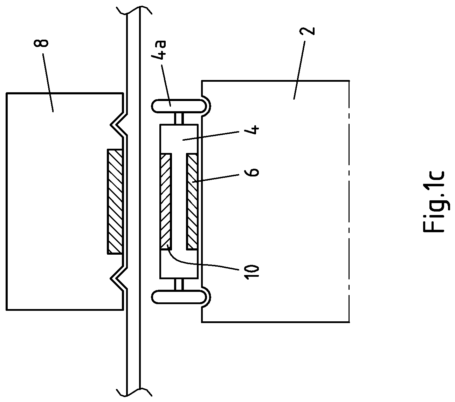

Fig. 1a zeigt eine Transportschiene 2, auf der beweglich gelagert ein Transportschlitten 4 angeordnet ist. Die Transportschiene 2 und der Transportschlitten 4 sind magnetisch über einen Permanentmagneten 6 miteinander gekoppelt. In der Transportschiene sind Magnetspulen vorgesehen, mit denen ein sich entlang der Transportschiene 2 bewegendes Magnetfeld erzeugbar ist. Durch magnetische Induktion in der Transportschiene 2 wird ein sich bewegendes Magnetfeld erzeugt, dessen Bewegung die Transportschlitten 4 in die Zeichenebene hinein oder aus der Zeichenebene heraus folgen. Das Prinzip eines Linearantriebs mit einem beweglich an einer Transportschiene 2 angeordneten Transportschlitten 4 ist an sich bekannt. Der Transportschlitten 4 ist beispielsweise über ein beispielhaft in Fig. 1c gezeigtes Kugellager oder in einer sonstigen Art und Weise zusätzlich an der Transportschiene 2 gelagert und in die Zeichenebene hinein oder aus der Zeichenebene heraus beweglich. Durch Veränderung des Magnetfelds entlang der Transportschiene 2 kann der Transportschlitten bewegt werden.

Magnetisch gekoppelt mit dem Transportschlitten 4 ist ein Mitnehmer 8. Die magnetische Kopplung des Mitnehmers 8 mit dem Transportschlitten 4 erfolgt über zumindest einen Permanentmagneten 10, 12. Entweder der Transportschlitten 4 oder der Mitnehmer 8 oder beide weisen einen Permanentmagneten 10, 12 auf. Auch ist es möglich, dass nur einer der Permanentmagneten 10, 12 vorgesehen ist, dann ist zusätzlich hierzu die diesem Magneten 10, 12 zugewandte Seite des Transportschlittens 4, respektive des Mitnehmers 8 ferromagnetisch gebildet.

Der Mitnehmer 8 ist beweglich in die Zeichenebene hinein oder aus der Zeichenebene heraus entlang einer Führungsschiene 14 geführt. Der Mitnehmer 8 bewegt sich synchron und entlang der gleichen Trajektorie wie der mit diesem gekoppelte Transportschlitten 4.

Zwischen dem Transportschlitten 4 und dem Mitnehmer 8 ist ein Luftspalt, in welchem eine Wand 16 einer Abfülleinrichtung, beispielsweise einer Aseptikeinheit, angeordnet ist. Die Wand 16 kann Teil eines Gehäuses einer solchen Aseptikeinheit sein. Das Gehäuse kann wie in Fig. 1a gezeigt, die Führungsschiene 14 samt Mitnehmer 8 vollständig umlaufen. Insbesondere die Bewegungsrichtung des Mitnehmers 8 umlaufend. Die in der Fig. 1a gestrichelte Linie ist natürlich nur beispielhaft und das Gehäuse kann jede sinnvolle Form annehmen. Das Gehäuse ist bevorzugt aus einem paramagnetischen oder nicht ferromagnetischen Material gebildet.

In der Fig. 1a ist zu erkennen, dass der Mitnehmer 8 auf der der Transportschiene 2 abgewandten Seite des Transportschlittens 4 mit dem Transportschlitten 4 magnetisch gekoppelt ist.

Fig. 1b zeigt ein ähnliches Ausführungsbeispiel. Hierbei ist die mechanische Führung des Transportschlittens 4 in der Transportschiene 2 gegenüber der Fig. 1a verändert. Ferner ist zu erkennen, dass der Mitnehmer 8 einer seitlichen Außenkante des Transportschlittens 4 zugewandt ist. Die Feldlinien des B-Felds verlaufen bei dem Ausführungsbeispiel gemäß Fig. 1b sowohl senkrecht zur Bewegungsrichtung des Transportschlittens 4 als auch winklig, vorzugsweise rechtwinklig zu der Oberfläche der Transportschiene 2, auf der der Transportschlitten 4 gleitet. Die seitlichen Oberflächen des Transportschlittens verlaufen im Betrieb im Wesentlichen vertikal. Auf einer solchen seitlichen Oberfläche stehen die B-Feld-Linien im Wesentlichen senkrecht.

Dies ist bei dem Ausführungsbeispiel gemäß der Fig. 1a anders. Hier verlaufen die B-Feldlinien senkrecht zur Bewegungsrichtung des Transportschlittens 4 entlang der Transportschiene 2 und gleichzeitig senkrecht zur Oberfläche der Transportschiene 2 auf der der Transportschlitten 4 gleitet. Die Feldlinien durchtreten eine obere Oberfläche des Transportschlittens 4 im Wesentlichen senkrecht.

Bei dem Ausführungsbeispiel gemäß der Fig. 1b kann die Führungsschiene 14 seitlich des Transportschlittens 4 angeordnet sein.

Die Führungsschiene 14 ist in den Ausführungsbeispielen gemäß der Figs. 1a-c so angeordnet, dass der Mitnehmer 8 zwischen der Führungsschiene 14 und den Transportschlitten 4 angeordnet ist.

Bei dem in Figs. 1a und 1c gezeigten Ausführungsbeispielen verläuft die Wand 16 zwischen dem Transportschlitten 4 und dem Mitnehmer 8 im Wesentlichen in einer Horizontalen. Bei dem in Fig. 1b gezeigten Ausführungsbeispiel verläuft die Wand 16 zwischen dem Transportschlitten 4 und dem Mitnehmer 8 im Wesentlichen in einer Vertikalen.

Fig. 1 c zeigt ein weiteres Ausführungsbeispiel, bei dem der Transportschlitten 4 über zwei seitlich angeordnete Rollenlager 4a auf der Transportschiene 2 gelagert sind. Die Haltekraft zwischen Transportschlitten 4 und Schiene 2 wird durch die Magnetkraft zwischen dem Magneten 6 und der Schiene 2 aufgebracht. Diese Haltekraft ist zumindest so groß wie die Gewichtskraft von Transportschlitten 4 und Mitnehmer 8, vorzugsweise jedoch zumindest das 1,5 oder 2 fache hiervon.

Zu erkennen ist in der Fig. 1c auch, dass zwischen dem Mitnehmer 8 und dem Transportschlitten 4 eine Wand 16 eines Gehäuses angeordnet ist. In dem Gehäuse ist der Mitnehmer auf einem Luftlager gelagert und über Nocken und Nuten geführt.

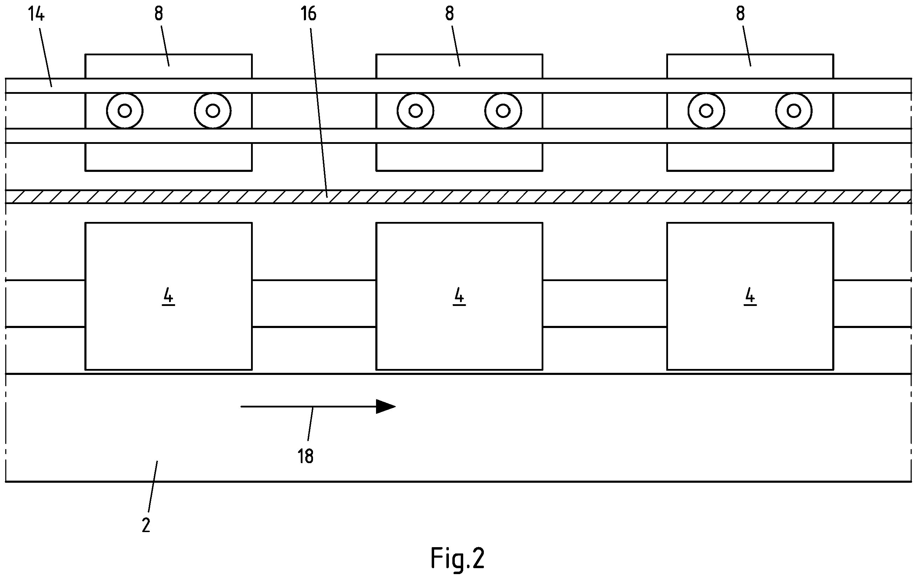

Fig. 2 zeigt ein weiteres Ausführungsbeispiel bei dem in Transportrichtung 18 entlang der Transportschiene 2 eine Mehrzahl an Transportschlitten 4 angeordnet ist. Den Transportschlitten 4 zugeordnet ist jeweils ein Mitnehmer 8, der in Transportrichtung 18 durch eine magnetische Kopplung mit dem Transportschlitten 4 bewegt wird. Zwischen dem Transportschlitten 4 und dem Mitnehmer 8 ist die Wand 16.

Die Mitnehmer 8 sind an einer Führungsschiene 14 beweglich angeordnet und insbesondere beweglich in Transportrichtung 18 daran gelagert.

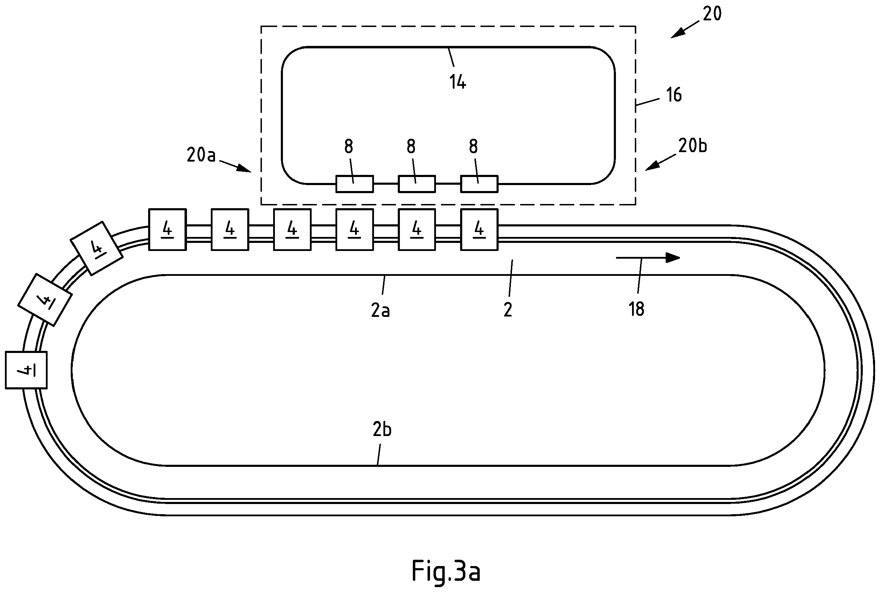

Fig. 3a zeigt ein Ausführungsbeispiel, bei dem die Transportschiene 2 einen ersten Schenkel 2a hat, der in einem Produktivbereich liegt und einen zweiten Schenkel 2b, der in einem Pufferbereich liegt. Dem Schenkel 2a zugeordnet ist beispielsweise eine Abfülleinrichtung, insbesondere eine Aseptikeinheit 20. In der Aseptikeinheit 20 werden Lebensmittel in Packungen abgefüllt. Die Aseptikeinheit 20 weist ein Gehäuse mit der Wand 16 auf. Im Bereich einer Einschleusung 20a werden aufgefaltete Packungsmäntel in die Aseptikeinheit 20 eingeführt und in einer Ausschleusung 20b werden gefüllte, vorzugsweise verschlossene Verpackungen aus der Aseptikeinheit 20 herausgeschleust.

Innerhalb der Aseptikeinheit 20 werden die Packungen 22 vorzugsweise verschiedenen Verarbeitungsschritten zugeführt, insbesondere einem Sterilisationsschritt, einem Abfüllschritt und einem Siegelschritt. Weitere Schritte sind ebenfalls möglich. Die gesiegelten Packungen 22 werden an der Ausschleusung 20b aus der Aseptikeinheit 20 ausgeschleust.

Im Bereich der Aseptikeinheit 20 sind die Mitnehmer 8 entlang der Führungsschiene 14 angeordnet.

Bei einer Bewegung der Transportschlitten 4 in Transportrichtung 18 werden durch magnetische Kopplung mit jeweils einem der Transportschlitten 4 die Mitnehmer 8 entlang der Führungsschiene 14 bewegt. Hierbei verläuft die Führungsschiene 14 bevorzugt zumindest in Teilen parallel zu der Transportschiene 2.

Die Mitnehmer 8 sind bevorzugt an der Führungsschiene 14 in Abständen montiert, die den Abständen zwischen den Transportschlitten 4 entsprechen. Die Abstände können variabel einstellbar sein, indem die Mitnehmer 8 variabel in ihrem Abstand zueinander an der Führungsschiene 14 angeordnet werden können.

Die Mitnehmer 8 können bei einer Variante, welche optional ist, untereinander über ein Seilzugsystem verbunden sein, so dass die Mitnehmer 8, die an dem Schenkel angeordnet sind, der der Transportschiene 2 am nächsten ist und somit durch die Transportschlitten 4 mitgenommen werden, gleichzeitig auch alle weiteren Mitnehmer 8 entlang der Führungsschiene 14 bewegen.

Die Führungsschiene 14 ist in sich geschlossen und bevorzugt vollständig innerhalb des Gehäuses der Aseptikeinheit 20 geführt.

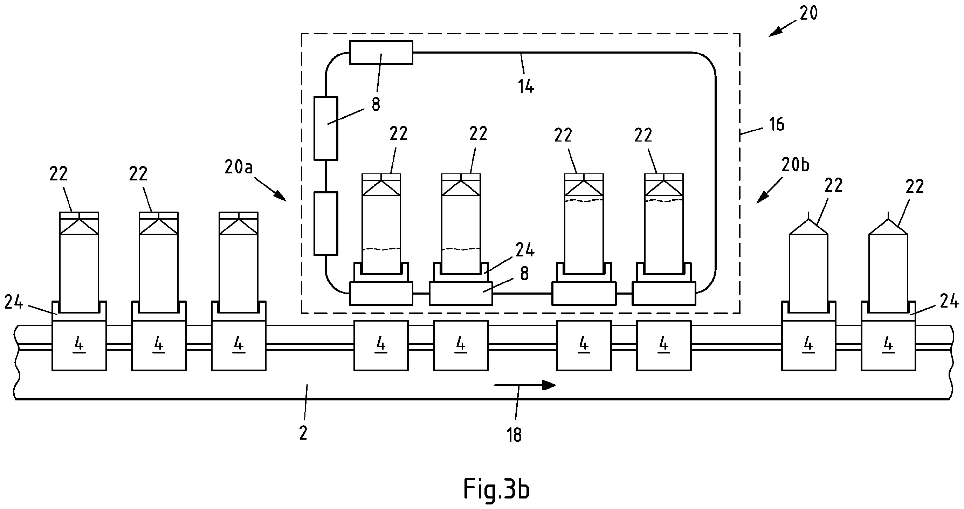

Fig. 3b zeigt ein Ausführungsbeispiel, bei dem Packungen 22 auf Trägern 24 geführt werden. Die Träger 24 sind einerseits an den Transportschlitten 4 angeordnet und insbesondere im Bereich der Aseptikeinheit 20 an den Mitnehmern 8 angeordnet.

Zu erkennen ist, dass die Packungen 22 zunächst an den Transportschlitten 4 vor der Einschleusung 20a angeordnet sind. Im Bereich der Einschleusung 20a erfolgt eine Übergabe der Träger 24 von dem Transportschlitten 4 an den jeweiligen Mitnehmer 8.

Im Bereich der Einschleusung 20a geht somit ein Träger 24 von dem Transportschlitten 4 auf einen Mitnehmer 8 über. Die mechanische Kopplung zwischen dem Träger 24 und dem Transportschlitten wird gelöst und es wird eine mechanische Kopplung zwischen dem Mitnehmer 8 und dem Träger 24 gebildet. Anschließend wird in der Aseptikeinheit 20 die Packung 22 in Transportrichtung 18 durch einen jeweiligen Mitnehmer 8 geführt. Dabei ist der jeweilige Mitnehmer 8 magnetisch mit einem jeweiligen Transportschlitten 4 gekoppelt, so dass ein Transport in Transportrichtung 18 erfolgen kann. Bei der Ausschleusung 20b wird die mechanische Kopplung zwischen dem Mitnehmer 8 und dem Träger 24 gelöst und es erfolgt eine mechanische Kopplung zwischen dem Transportschlitten 4 und dem Träger 24.

Sowohl die Einschleusung als auch die Ausschleusung und die Übergabe der mechanischen Kopplung des Trägers 24 zwischen dem Transportschlitten 4 und dem Mitnehmer 8 erfolgt vorzugsweise während einer kontinuierlichen und/oder beschleunigten (positiv und/oder negativ beschleunigt) Bewegung von Transportschlitten 4 respektive Mitnehmer 8 entlang der Bewegungsrichtung 18.

Nach der Ausschleusung 20b werden die Verpackungen durch die Transportschlitten 4 entlang der Transportschiene 2 weiter bewegt und einer nachfolgenden Bearbeitung zugeführt.

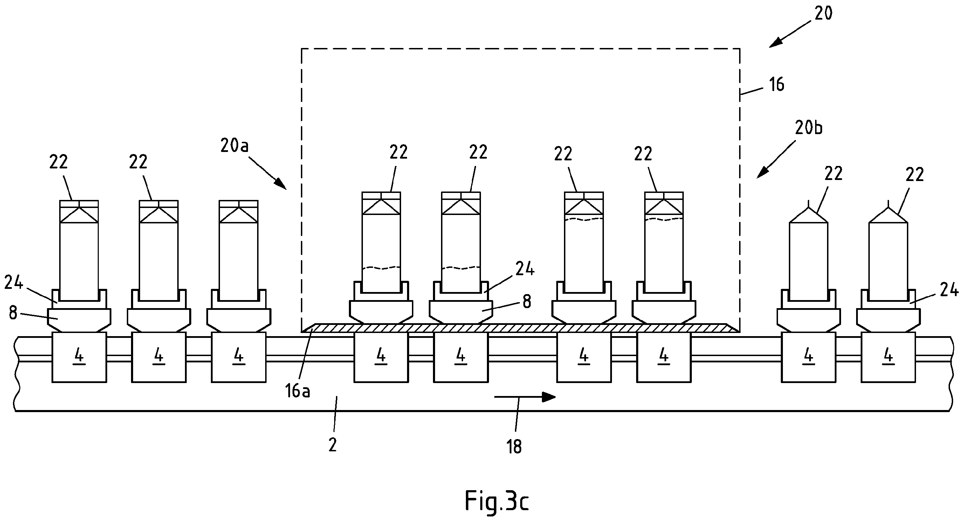

Fig. 3c zeigt ein Ausführungsbeispiel, bei dem die Mitnehmer 8 im Bereich einer Einschleusung 20a von den Transportschlitten getrennt werden. Hierbei greift eine Lasche 16a des Gehäuses während der Bewegung der Mitnehmer 8 in Bewegungsrichtung 10 zwischen Mitnehmer 8 und Transportschlitten 4. Dadurch wird ein Spalt zwischen Mitnehmer 8 und Transportschlitten 4 gebildet in welchem die Wand 16 des Gehäuses liegt. Die Mitnehmer 8 werden dann durch die magnetische Kopplung weiter durch die Transportschlitten 4 in Bewegungsrichtung 18 bewegt, befinden sich aber samt Träger 24 und Packung 22 innerhalb des Gehäuses der Aseptikeinheit 20.

An der Ausschleusung 20b werden die Mitnehmer 8 wieder auf die Transportschlitten 4 geführt und danach unmittelbar durch diese gehalten.

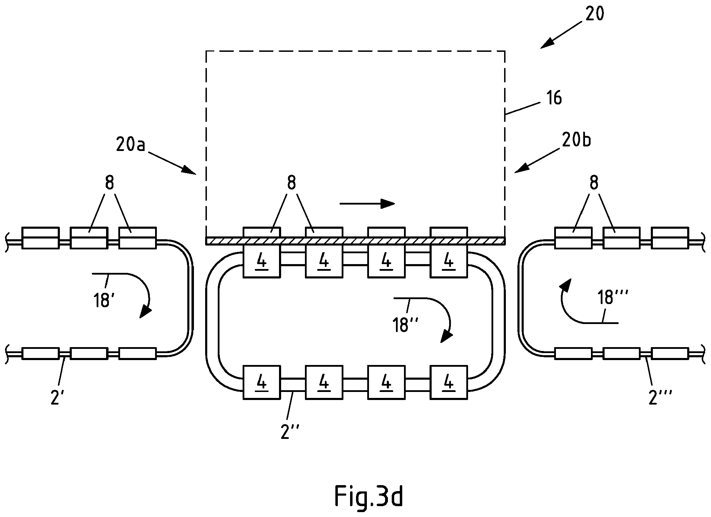

Fig. 3d zeigt ein weiteres Ausführungsbeispiel, bei dem verschiedene Transportmittel 2', 2" und 2" zusammenwirken. Das Transportmittel 2" kann eine Transportschiene 2" im Sinne der obigen Ausführungen sein und entsprechend mit dem Mitnehmer 8 über die Transportschlitten 4 gekoppelt sein. Die Transportschiene 2" hat eine Bewegungsrichtung 18.

Vor der Einschleusung 20a kann ein Transportmittel 2' z.B. als Transportkette gebildet sein. Auf der Transportkette können Transportschlitten 4 in der Form von magnetischen Haltern oder dergleichen gebildet sein. Das Transportband hat eine Bewegungsrichtung 18'. An den Transportschlitten 4 sind die Mitnehmer 8 magnetisch gekoppelt.

An der Einschleusung 20a erfolgt eine Übergabe der Mitnehmer 8 von der Transportschlitten 4 der Transportmittel 2' auf Transportschlitten 4 der Transportmittel 2". Anschließend werden die Mitnehmer 8 entsprechend der obigen Ausführungen durch die Aseptikeinheit 20 bewegt.

An einer Ausschleusung 20b werden die Mitnehmer 8 von der Transportschiene 2" gelöst und einem Transportmittel 2‴ übergeben. Dies kann eine Kette oder ein Band sein. Dort können ebenfalls Transportschlitten in der Form von Haltern gebildet sein, an denen die Mitnehmer 8 in Richtung 18‴ bewegt werden.

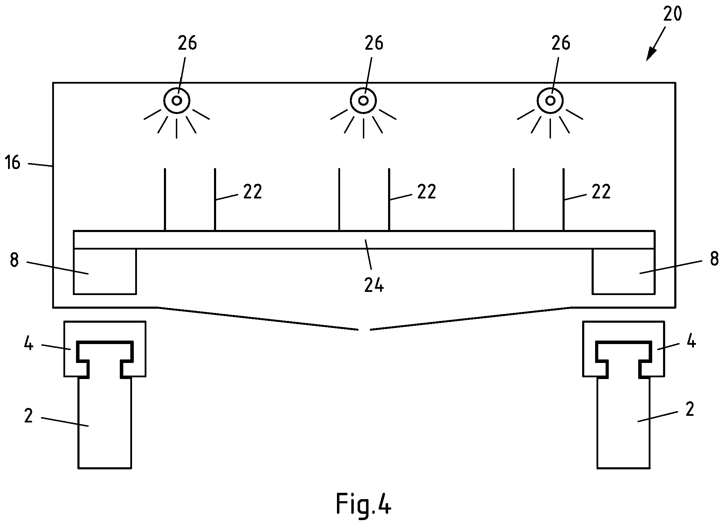

Fig. 4 zeigt eine Schnittansicht durch eine Aseptikeinheit 20. Zu erkennen ist, dass die Wand 16 der Aseptikeinheit 20 zwischen dem Transportschlitten 4 und dem Mitnehmer 8 angeordnet ist. Ferner ist zu erkennen, dass der Träger 24 zwischen jeweils zwei Transportschlitten 4 respektive zwei Mitnehmern 8 geführt ist. In der in Fig. 4 dargestellten Ansicht wird der Träger 24 durch die Mitnehmer 8 in die Zeichenebene hinein transportiert. Auf dem Träger 24 sind die Packungen 22 nebeneinander angeordnet.

In der Aseptikeinheit 20 können beispielsweise Düsen 26 vorgesehen sein, um Sterilisationsmittel, beispielsweise HzOz auf die Packungen 22 und den Träger 24 zu dampfen oder sprühen, um diese vor einem Befüllen der Packungen 22 zu sterilisieren.

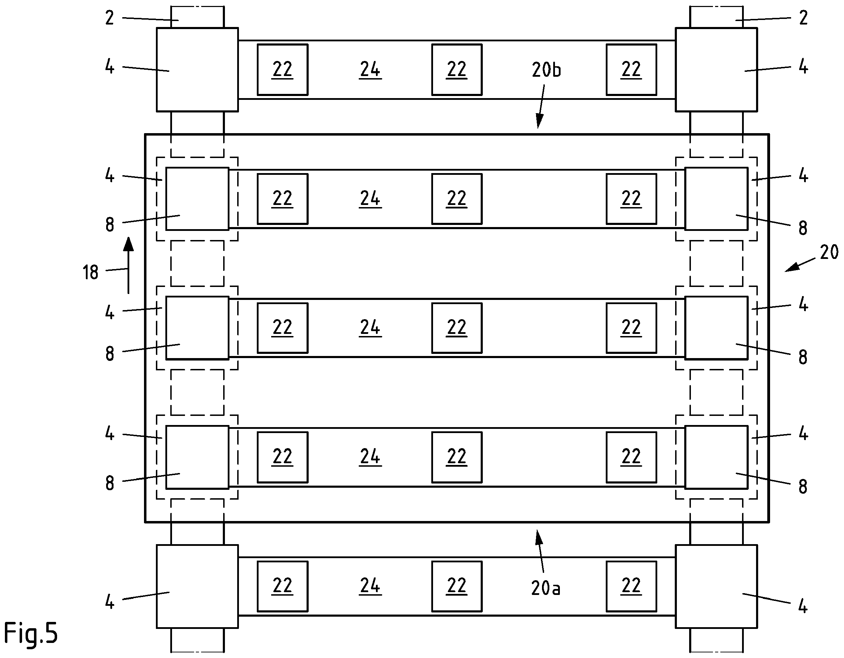

Fig. 5 zeigt eine Draufsicht auf eine Aseptikeinheit 20 mit geöffnetem Deckel. Der Boden der Aseptikeinheit 20 bildet die Wand 16 zwischen den Transportschlitten 4 und den Mitnehmern 8. Zu erkennen ist, dass im Bereich der Einschleusung 20a die Transportschlitten 4 unter den Boden des Gehäuses der Aseptikeinheit 20 abtauchen mit den Mitnehmern 8 jedoch magnetisch gekoppelt bleiben. Entlang der Transportrichtung 18 werden die Träger 24 im Bereich der Aseptikeinheit 20 durch die Mitnehmer 8 transportiert. Dabei ist eine jeweilige magnetische Kopplung zwischen jeweils einem Mitnehmer 8 und einem Transportschlitten 4 gegeben. Auf den Trägern 24 sind die Packungen 22 angeordnet. Im Bereich der Ausschleusung 20b werden die Mitnehmer 8 unmittelbar auf die Transportschlitten 4 übergeben und von dort weiter entlang der Transportschiene 2 transportiert.

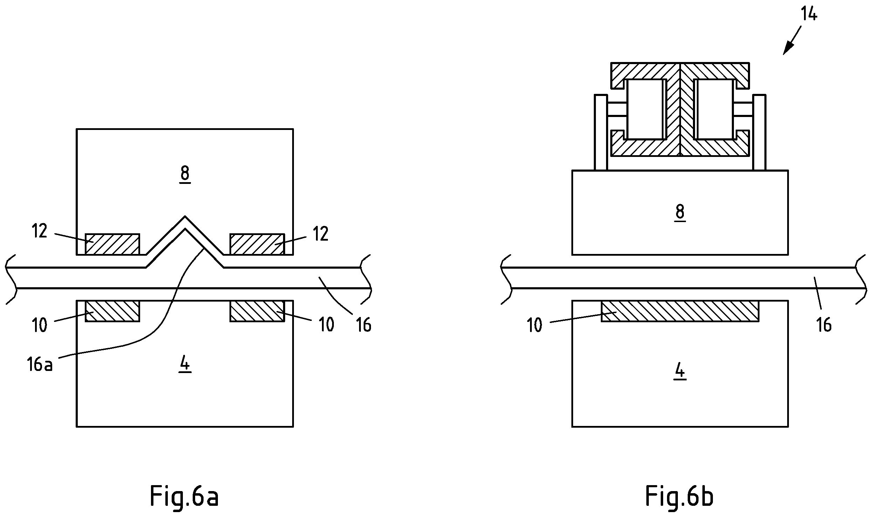

Fig. 6a zeigt eine erste Möglichkeit einer Führung eines Mitnehmers 8 in Form eines Gleitlagers. Der Mitnehmer 8 ist auf einer Nocke 16a der Wand 16 geführt. Ein vorzugsweise ölfreies Gleitmittel ist in dem Spalt zwischen der Wand 16 und dem Mitnehmer 8 vorgesehen. Durch eine magnetische Kopplung zwischen den Permanentmagneten 10, 12 wird der Mitnehmer in die Zeichenebene hinein von dem Transportschlitten 4 bewegt.

Fig. 6b zeigt ein weiteres Ausführungsbeispiel, bei dem der Mitnehmer 8 lediglich ferromagnetisch ist und an dem Transportschlitten 4 ein Permanentmagnet 10 vorgesehen ist. Der Mitnehmer 8 ist an einer Führungsschiene 14, beispielsweise über Rollen gelagert und kann in die Zeichenebene hinein transportiert werden. Mit Hilfe der gezeigten Anordnung ist es möglich, eine hochreine Abfüllung durchzuführen.

### Bezugszeichenliste

- 2: Transportmittel / Transportschiene
- 2a,b: Schenkel
- 4: Transportschlitten
- 6: Permanentmagnet
- 8: Mitnehmer
- 10,12: Permanentmagnet
- 14: Führungsschiene
- 16: Wand
- 16a: Nocke
- 18: Transportrichtung
- 20: Aseptikeinheit
- 20a: Einschleusung
- 20b: Ausschleusung
- 22: Packung
- 24: Träger

## Patentansprüche

1. Verpackungseinrichtung, insbesondere Fülleinrichtung, mit
- zumindest einem Transportmittel (2', 2", 2‴),
- zumindest einem an dem Transportmittel (2', 2", 2‴) angeordneten magnetischen Transportschlitten (4), wobei
- der Transportschlitten (4) zum Transport zumindest einer Verpackung eingerichtet ist und wenigstens entlang eines Produktivbereichs der Transportmittel (2', 2", 2‴) bewegt wird, wobei
- der Transportschlitten (4) magnetisch mit einem von dem Transportschlitten (4) mechanisch getrennten Mitnehmer gekoppelt ist und zwischen dem Mitnehmer und dem Transportschlitten (4) eine Wand angeordnet ist
**dadurch gekennzeichnet,**
- **dass** vor einer Einschleusung (20a) des Transportschlittens (4) in den Produktivbereich (20) der Mitnehmer (8) unmittelbar, ohne eine Zwischenwand mit dem Transportschlitten (4) verbunden ist und dass nach einer Einschleusung der Mitnehmer (8) durch die Wand (16) von dem Transportschlitten (4) getrennt ist und
- **dass** vor einer Ausschleusung (20b) des Transportschlittens (4) aus den Produktivbereich (20) der Mitnehmer (8) durch die Wand (16) von dem Transportschlitten (4) getrennt ist und dass nach einer Ausschleusung der Mitnehmer (8) unmittelbar, ohne eine Zwischenwand (16) mit dem Transportschlitten (4) verbunden ist.

2. Verpackungseinrichtung nach Anspruch 1,
**dadurch gekennzeichnet,**
- **dass** das Transportmittel (2', 2", 2‴) eine Transportschiene (2), ein Transportband oder eine Transportkette ist.

3. Verpackungseinrichtung nach einem der vorangehenden Ansprüche,
**dadurch gekennzeichnet,**
- **dass** der Transportschlitten (4) beweglich an dem Transportmittel (2', 2", 2‴) angeordnet ist, wobei das Transportmittel (2', 2", 2‴) und die Transportschlitten (4) elektromotorisch miteinander gekoppelt sind, oder
- **dass** der Transportschlitten (4) mechanisch fest mit dem Transportmittel (2', 2", 2‴) gekoppelt ist.

4. Verpackungseinrichtung nach einem der vorangehenden Ansprüche,
**dadurch gekennzeichnet,**
- **dass** an dem Transportmittel (2', 2", 2‴), insbesondere dem Transportschlitten (4) auf der dem Transportmittel (2', 2", 2‴), insbesondere dem Transportschlitten (4), abgewandten Seite ein Permanentmagnet (6) zur magnetischen Kopplung mit dem Mitnehmer angeordnet ist.

5. Verpackungseinrichtung nach einem der vorangehenden Ansprüche,
**dadurch gekennzeichnet,**
- **dass** der Mitnehmer ferromagnetisch ist und mit dem permanentmagnetischen Transportschlitten (4) magnetisch gekoppelt ist und/oder
- **dass** der Mitnehmer permanentmagnetisch ist und mit dem Transportschlitten (4) magnetisch gekoppelt ist und/oder
- **dass** der Transportschlitten (4) und der Mitnehmer permanentmagnetisch sind.

6. Verpackungseinrichtung nach einem der vorangehenden Ansprüche,
**dadurch gekennzeichnet,**
- **dass** der Mitnehmer auf einem Lager gelagert ist, wobei das Lager zumindest in Teilen parallel zu dem Transportmittel (2', 2", 2‴) verläuft, insbesondere dass Lager hydrostatisch oder hydrodynamisch ist, wobei der Schmierstoff insbesondere ölfrei ist und/oder wobei das Lager ein Luftkissenlager, ein Gleitlager oder ein Rollenlager ist und/oder
- **dass** an dem Mitnehmer ein Träger (24) für zumindest eine Verpackung angeordnet ist.

7. Verpackungseinrichtung nach einem der vorangehenden Ansprüche,
**dadurch gekennzeichnet,**
**dass** die Transportschiene (2) und die Transportschlitten (4) als Linearmotor gebildet sind und/oder
**dass** die Transportschiene (2) aus einem Stator des Linearmotors gebildet ist und insbesondere eine Mehrzahl entlang der Trajektorie angeordnete Magnetspulen aufweist.

8. Verpackungseinrichtung nach einem der vorangehenden Ansprüche,
**dadurch gekennzeichnet,**
**dass** das Transportmittel (2', 2", 2‴) zumindest einen Schenkel (2a, b) entlang einer Transportvorrichtung aufweist, insbesondere dass die Transportvorrichtung einen geschlossenen Ring mit zumindest einem Schenkel (2a, b) in der Form des Transportmittels (2', 2", 2‴) bildet.

9. Verpackungseinrichtung nach einem der vorangehenden Ansprüche,
**dadurch gekennzeichnet,**
- **dass** die Transportschlitten (4) mit einer U-förmigen oder C-förmigen Aufnahme an der Transportschiene (2) angeordnet sind, insbesondere dass die Transportschlitten (4) winklig zu ihrer Bewegungsrichtung formschlüssig an der Transportschiene (2) angeordnet sind und/oder
- **dass** die Transportmittel (2', 2", 2‴) auf der Transportschiene (2) rollend gelagert sind und durch eine magnetische Kopplung an der Transportschiene (2) gehalten sind.

10. Verfahren zum Betreiben einer Verpackungseinrichtung gemäß Anspruch 1, insbesondere Füllmaschine bei dem
- zumindest ein Transportschlitten (4) entlang eines Transportmittels (2', 2", 2‴) bewegt wird, und
- Verpackungen in einem Strom entlang eines Produktivbereichs des Transportmittels (2', 2", 2‴) durch die Transportschlitten (4) bewegt werden, wobei
- der Transportschlitten (4) magnetisch mit einem von dem Transportschlitten (4) mechanisch getrennten Mitnehmer gekoppelt ist und wenigstens abschnittsweise auf einer ersten Seite einer Wand (16) bewegt wird während der Mitnehmer auf einer zweiten Seite der Wand (16) bewegt wird
**dadurch gekennzeichnet,**
- **dass** vor einer Einschleusung der Mitnehmer (8) unmittelbar, ohne eine Zwischenwand mit dem Transportschlitten (4) verbunden ist und dass nach einer Einschleusung der Mitnehmer (8) durch die Wand (16) von dem Transportschlitten (4) getrennt ist und
- **dass** vor einer Ausschleusung der Mitnehmer (8) durch die Wand (16) von dem Transportschlitten (4) getrennt ist und dass nach einer Ausschleusung der Mitnehmer (8) unmittelbar, ohne eine Zwischenwand (16) mit dem Transportschlitten (4) verbunden ist.

## Claims

1. Packaging device, in particular filling device, with
- at least one means of transport (2', 2", 2‴),
- at least one magnetic transport carriage (4) arranged on the transport means (2', 2", 2‴), wherein
- the transport carriage (4) is arranged for transporting at least one package and is moved at least along a productive area of the transport means (2', 2", 2‴), wherein
- the transport carriage (4) is magnetically coupled to a carrier which is mechanically separate from the transport carriage (4), and a wall is arranged between the carrier and the transport carriage (4)
**characterized in that**
- before an insertion (20a) of the transport carriage (4) into the productive area (20) the carrier (8) is directly connected to the transport carriage (4) without an intermediate wall and that after an insertion the carrier (8) is separated from the transport carriage (4) by the wall (16) and
- before an ejection (20b) of the transport carriage (4) from the productive area (20) the carrier (8) is separated from the transport carriage (4) by the wall (16) and that after an ejection the carrier (8) is directly connected to the transport carriage (4) without an intermediate wall (16).

2. Packaging device according to claim 1,
**characterized in that**
- the transport means (2', 2", 2‴) is a transport rail (2), a transport belt or a transport chain.

3. Packaging device according to any of the preceding claims,
**characterized in that**
- the transport carriage (4) is movably arranged on the transport means (2', 2", 2‴), wherein the transport means (2', 2", 2‴) and the transport carriages (4) are coupled to each other by electric motors, or
- the transport carriage (4) is mechanically fixedly coupled to the transport means (2', 2", 2‴).

4. Packaging device according to any of the preceding claims,
**characterized in that**
- a permanent magnet (6) is arranged on the transport means (2', 2", 2‴), in particular the transport carriage (4), on the side facing away from the transport means (2', 2", 2‴), in particular the transport carriage (4), for magnetic coupling with the carrier.

5. Packaging device according to any one of the preceding claims,
**characterized in that**
- the carrier is ferromagnetic and is magnetically coupled to the permanent magnetic transport carriage (4) and/or
- the carrier is permanent-magnetic and is magnetically coupled to the transport carriage (4) and/or
- the transport carriage (4) and the carrier are permanently magnetic.

6. Packaging device according to any of the preceding claims,
**characterized in that**
- the carrier is mounted on a bearing, the bearing running at least in parts parallel to the transport means (2', 2", 2‴), in particular that the bearing is hydrostatic or hydrodynamic, the lubricant being in particular oil-free and/or the bearing being an air cushion bearing, a plain bearing or a roller bearing and/or
- a mounting element (24) for at least one package is arranged on the carrier.

7. Packaging device according to any of the preceding claims,
**characterized in that**
- the transport rail (2) and the transport slides (4) are formed as linear motors and/or
- the transport rail (2) is formed of a stator of the linear motor and in particular has a plurality of magnetic coils arranged along the trajectory.

8. Packaging device according to any of the preceding claims,
**characterized in that**
- the transport means (2', 2", 2‴) has at least one leg (2a, b) along a transport device, in particular that the transport device forms a closed ring with at least one leg (2a, b) in the shape of the transport means (2', 2", 2‴).

9. Packaging device according to any of the preceding claims,
**characterized in that**
- the transport carriages (4) are arranged on the transport rail (2) with a U-shaped or C-shaped receptacle, in particular that the transport carriages (4) are arranged on the transport rail (2) in a form-fitting manner at an angle to their direction of movement, and/or
- the transport means (2', 2", 2‴) are mounted rolling on the transport rail (2) and are held to the transport rail (2) by a magnetic coupling.

10. Method of operating a packaging device according to claim 1, in particular a filling machine in which
- at least one transport carriage (4) is moved along a transport means (2', 2", 2‴), and
- packages are moved in a stream along a productive area of the transport means (2', 2", 2‴) by the transport carriages (4), wherein
- the transport carriage (4) is magnetically coupled to a carrier which is mechanically separated from the transport carriage (4) and is moved at least in sections on a first side of a wall (16) while the carrier is moved on a second side of the wall (16),
**characterized in that**
- before an insertion the carrier (8) is directly connected to the transport carriage (4) without an intermediate wall and that after an insertion the carrier (8) is separated from the transport carriage (4) by the wall (16) and
- that before an ejection the carrier (8) is separated from the transport carriage (4) by the wall (16) and that after an ejection the carrier (8) is directly connected to the transport carriage (4) without an intermediate wall (16).

## Revendications

1. Dispositif d'emballage, en particulier dispositif de remplissage, avec
- au moins un moyen de transport (2', 2", 2‴),
- au moins un chariot de transport magnétique (4) disposé sur le moyen de transport (2', 2", 2‴), où
- le chariot de transport (4) est configuré pour le transport d'au moins un emballage et est déplacé au moins le long d'une zone productive des moyens de transport (2', 2", 2'"), où
- le chariot de transport (4) est couplé magnétiquement à un entraîneur séparé mécaniquement du chariot de transport (4), et une paroi est disposée entre l'entraîneur et le chariot de transport (4)
**caractérisé en ce**
- **que**, avant une introduction (20a) du chariot de transport (4) dans la zone productive (20), l'entraîneur (8) est relié directement, sans paroi intermédiaire, au chariot de transport (4) et que, après une introduction, l'entraîneur (8) est séparé du chariot de transport (4) par la paroi (16) et
- **qu'**avant un éclusage (20b) du chariot de transport (4) hors de la zone productive (20), l'entraîneur (8) est séparé du chariot de transport (4) par la paroi (16) et qu'après un éclusage, l'entraîneur (8) est relié directement, sans paroi intermédiaire (16), au chariot de transport (4).

2. Dispositif d'emballage selon la revendication 1,
**caractérisé en ce**
- **que** le moyen de transport (2', 2", 2'") est un rail de transport (2), une bande transporteuse ou une chaîne de transport.

3. Dispositif d'emballage selon l'une des revendications précédentes,
**caractérisé en ce**
- **que** le chariot de transport (4) est disposé de manière mobile sur le moyen de transport (2', 2", 2‴), où le moyen de transport (2', 2", 2‴) et les chariots de transport (4) sont couplés entre eux par un moteur électrique, ou
- **que** le chariot de transport (4) est couplé mécaniquement de manière fixe au moyen de transport (2', 2", 2‴).

4. Dispositif d'emballage selon l'une des revendications précédentes,
**caractérisé en ce**
- **qu'**un aimant permanent (6) est disposé sur le moyen de transport (2', 2", 2'"), en particulier sur le chariot de transport (4), sur le côté opposé au moyen de transport (2', 2", 2'"), en particulier au chariot de transport (4), pour le couplage magnétique avec l'entraîneur.

5. Dispositif d'emballage selon l'une des revendications précédentes,
**caractérisé en ce**
- **que** l'entraîneur est ferromagnétique et est couplé magnétiquement au chariot de transport (4) à aimant permanent et/ou
- l'entraîneur à aimant permanent et est couplé magnétiquement avec le chariot de transport (4) et/ou
- le chariot de transport (4) et l'entraîneur sont à aimant permanent.

6. Dispositif d'emballage selon l'une des revendications précédentes,
**caractérisé en ce**
- **que** l'entraîneur est monté sur un palier, où le palier s'étend au moins en partie parallèlement au moyen de transport (2', 2", 2'"), en particulier que le palier est hydrostatique ou hydrodynamique, où le lubrifiant est en particulier exempt d'huile et/ou le palier est un palier à coussin d'air, un palier lisse ou un palier à rouleaux, et/ou
- **qu'**un support (24) pour au moins un emballage est disposé sur l'entraîneur.

7. Dispositif d'emballage selon l'une des revendications précédentes,
**caractérisé en ce** - que le rail de transport (2) et les chariots de transport (4) sont formés comme moteur linéaire et/ou
- que le rail de transport (2) est formé d'un stator du moteur linéaire et a en particulier une pluralité de bobines magnétiques disposées le long de la trajectoire.

8. Dispositif d'emballage selon l'une des revendications précédentes,
**caractérisé en ce**
- **que** le moyen de transport (2', 2", 2'") a au moins une branche (2a, b) le long d'un dispositif de transport, en particulier que le dispositif de transport forme un anneau fermé avec au moins une branche (2a, b) sous forme du moyen de transport (2', 2", 2'").

9. Dispositif d'emballage selon l'une des revendications précédentes,
**caractérisé en ce**
- **que** les chariots de transport (4) sont disposés sur le rail de transport (2) avec un logement en forme de U ou de C, en particulier que les chariots de transport (4) sont disposés sur le rail de transport (2) en liaison de forme dans un angle par rapport à leur direction de déplacement, et/ou
- **que** les moyens de transport (2', 2", 2'") sont montés de manière roulant sur le rail de transport (2) et sont maintenus sur le rail de transport (2) par un couplage magnétique.

10. Procédé pour exploiter un dispositif d'emballage selon la revendication 1, en particulier une machine de remplissage, dans lequel
- au moins un chariot de transport (4) est déplacé le long d'un moyen de transport (2', 2", 2‴) et
- d'emballages sont déplacés en un flux le long d'une zone productive du moyen de transport (2', 2", 2'") par les chariots de transport (4), où
- le chariot de transport (4) est couplé magnétiquement à un entraîneur séparé mécaniquement du chariot de transport (4) et est déplacé au moins par sections sur un premier côté d'une paroi (16) pendant que l'entraîneur est déplacé sur un deuxième côté de la paroi (16)
**caractérisé en ce**
- **que**, avant une insertion, l'entraîneur (8) est relié directement, sans paroi intermédiaire, au chariot de transport (4) et que, après une insertion, l'entraîneur (8) est séparé du chariot de transport (4) par la paroi (16) et
- **qu'**avant un éclusage, l'entraîneur (8) est séparé du chariot de transport (4) par la paroi (16) et qu'après un éclusage, l'entraîneur (8) est relié directement au chariot de transport (4) sans paroi intermédiaire (16).
